# EUROPÄISCHE PATENTSCHRIFT

(11) **EP 1 665 740 B1**
(45) Veröffentlichungstag und Bekanntmachung des Hinweises auf die Patenterteilung: **16.11.2011**
(21) Anmeldenummer: 04786721.3
(22) Anmeldetag: 08.09.2004
(51) Int. Cl.: H04M 1/04, H04M 1/60

(54) **VERBINDUNGSSYSTEM, GRUNDTEIL UND ADAPTERTEIL ZUR VERBINDUNG VON MOBILFUNK-ENDGER TEN**
CONNECTION SYSTEM, BASE PART AND ADAPTER PART FOR CONNECTING MOBILE RADIO TERMINALS
SYSTEME DE CONNEXION, PIECE DE BASE ET ADAPTATEUR POUR CONNECTER DES TELEPHONES MOBILES

(30) Priorität: 16.09.2003 DE 20314317 U
(43) Veröffentlichungstag der Anmeldung: 07.06.2006
(73) Patentinhaber: Audioton Kabelwerk GmbH Zweigniederlassung Scheinfeld, 91443 Scheinfeld (DE)
(72) Erfinder: SCHLEGEL, Thomas, 90453 Nürnberg (DE); CULLMANN, Wolfgang, 90579 Langenzenn (DE)
(74) Vertreter: Lelgemann, Karl-Heinz
(86) Internationale Anmeldenummer: PCT/DE2004/001999
(87) Internationale Veröffentlichungsnummer: WO 2005/029822

(56) Entgegenhaltungen:
- WO-A1-02/076793
- WO-A2-02/060168
- US-A1- 2002 032 042
- US-B1- 6 532 374
- "Universeller Bluetooth-Adapter für Auto-Freisprechanlagen" HEISE, 6. November 2002 (2002-11-06), XP002278001

## Beschreibung

Die Erfindung betrifft ein Verbindungssystem zur Verbindung von Mobilfunk-Endgeräten mit einer in einem Fahrzeug angeordneten Elektronik nach dem Oberbegriff des Patentanspruchs 1.

In EP 1 119 160 A2 wird beispielsweise ein universelles Verbindungssystem für Mobilfunk-Endgeräte beschrieben.

Eine Freisprech-Einrichtung, die in einem Fahrzeug installiert werden kann, wird von einem universellen, festen Systemteil und einem austauschbaren Systemteil gebildet. Der universelle Systemteil weist eine Stromversorgungs-Einrichtung, ein Mikrofon und einen Lautsprecher, die elektrisch mit der Stromversorgungs-Einrichtung verbunden sind, und ein spezielles Kabel auf. Das Kabel weist ein erstes elektrisches Verbindungselement zur Verbindung mit der Stromversorgungs-Einrichtung und ein zweites Verbindungselement zur Verbindung mit der Fahrzeug-Antenne auf. Das Kabel ist weiter mit einer Halteplatte verbunden, die mit dem austauschbaren Systemteil verbindbar ist. Der austauschbare Systemteil besteht hierbei aus einem Halteteil, das der Aufnahme des Mobilfunk-Endgerätes dient und das eine Elektronik zur Anpassung der Stromversorgung zwischen Stromversorgungs-Einrichtung und Mobilfunk-Endgerät aufweist.

Aus der WO 02/060168 A2 ist ein Verbindungssystem bekannt, das der Verbindung von Mobilfunk-Endgeräten mit einer in einem Fahrzeug angeordneten Elektronik dient, wobei das Verbindungssystem ein Grundteil zur permanenten Befestigung im Fahrzeug, ein Adapterteil und ein oder mehrere Halteteile zur jeweiligen Aufnahme eines Mobilfunk-Endgerätes aufweist, die über eine zweite mechanische und elektrische Schnittstelle mit dem Grundteil verbindbar sind, die zweite mechanische und elektrische Schnittstelle des Grundteils eine Schnittstelle zum Anschluß von Halteteilen für Mobilfunkendgeräte ist, die eine Steuereinrichtung zur Kommunikation über die zweite Schnittstelle mittels eines ersten, universellen Protokolls und zur Konvertierung des ersten, universellen Protokolls in ein zweites, endgerätespezifisches Protokoll aufweist, das Adapterteil eine mechanische und elektrische Schnittstelle zur elektrischen und mechanischen Verbindung mit dem Grundteil des Verbindungssystems aufweist.

Der Erfindung liegt nun die Aufgabe zugrunde, die Flexibilität eines Verbindungssystems, das der Verbindung von Mobilfunk-Endgeräten mit einer in einem Fahrzeug angeordneten Elektronik dient, zu verbessern.

Diese Aufgabe wird von einem Verbindungssystem zur Verbindung von Mobilfunk-Endgeräten mit einer in einem Fahrzeug angeordneten Elektronik gelöst, das außer den im Oberbegriff auch die im kennzeichnenden Teil des Patentanspruchs 1 angegebenen Merkmale aufweist.

Durch die Erfindung werden eine Vielzahl von Vorteilen erzielt. So wird beispielsweise ermöglicht, dass die fest im Fahrzeug installierte Elektronik mit geringem Aufwand mit verschiedenartigen Mobilfunk-Endgeräten verbindbar ist. So ist es möglich, mit einer Bluetooth-Schnittstelle versehene Mobilfunk-Endgeräte und mit unterschiedlichen proprietären, galvanischen Steuerschnittstellen versehene Mobilfunk-Endgeräte mit ein und derselben fahrzeugseitigen Elektronik zu verbinden, ohne Änderungen in dieser Elektronik vornehmen zu müssen. Weiter werden Kostenvorteile in der Produktion erzielt und die Benutzerfreundlichkeit des Verbindungssystems erhöht.

Vorteilhafte Ausgestaltungen der Erfindung sind in den Unteransprüchen bezeichnet.

So ist es beispielsweise möglich, ein Grundteil mit einer mechanischen und elektrischen Schnittstelle auszugestalten, die für den Anschluß von Halteteilen für Mobilfunk-Endgeräte geeignet ist, die eine Steuereinrichtung zur Konvertierung des ersten, universellen Protokolls in ein zweites, endgerätespezifisches Protokoll aufweisen. Durch diese Maßnahme wird die Aufwärts-Kompatibilität des Verbindungssystems sichergestellt und ermöglicht, das Verbindungssystem für beliebige weitere, zukünftige Mobilfunk-Endgeräte auszulegen.

Weiter ist es auch möglich, dass die mechanische und elektrische Schnittstelle des Grundteils eine Schnittstelle zur Kommunikation mittels eines oder mehreren endgeräte-spezifischen Protokollen ist. Die Kommunikations-Einrichtung ist dann vorzugsweise so ausgestaltet, dass sie an die Elektronik bzw. Signalvearbeitungs-Einrichtung Daten übermittelt, die die Signalverarbeitungs-Einrichtung veranlasst und/oder es der Signalverarbeitungs-Einrichtung ermöglicht, mit der Kommunikations-Einrichtung mittels des ersten Protokolls zu kommunizieren.

Weitere Vorteile werden dadurch erzielt, dass das Grundteil eine Auswahl-Schaltung zur wahlweisen Verbindung einer elektrischen Schnittstelle und der mechanischen und elektrischen Schnittstelle oder der elektrischen Schnittstelle mit der Kommunikations-Einrichtung aufweist. Die Umschaltung kann hierbei automatisch oder manuell gesteuert erfolgen. Durch die Auswahl-Schaltung wird sichergestellt, dass die fahrzeugseitige Elektronik stets mit dem gewünschten Mobilfunk-Endgerät verbunden ist.

Es ist zweckmäßig, dass die elektrische Schnittstelle eine Schnittstelle zur Kommunikation mittels des ersten, universellen Protokolls darstellt. In diesem Fall kann das Grundteil besonders einfach und kostengünstig ausgestaltet werden.

Produktionstechnische Vorteile lassen sich dadurch erzielen, dass die Kommunikations-Einrichtung aus mehreren, auf einem separaten elektrischen Verbindungselement, beispielsweise einer Platine, angeordneten elektrischen Bauteilen besteht, wobei die separate Platine über mehrere Kontaktelemente mit der Hauptplatine des Grundteils verbunden ist. Die Kommunikations-Einrichtung hat demnach die Form einer "Briefmarke", die zur Erweiterung des Leistungsumfangs auf einfache Weise auf eine Platine des Grundteils, der Signalverarbeitungs-Einrichtung oder des Adapterteils aufbringbar ist. Hierdurch ist eine besonders kostengünstige Nachrüstung eines Verbindungssystems mit dem durch die Erfindung erzielten zusätzlichen Leistungsmerkmal möglich. Auch ergeben sich Kostenvorteile in der Erstausstattung, da für den erhöhten Leistungsumfang nur die "Briefmarke" auf die dafür vorgesehene Stelle der Platine des Grundteils, der Signalverarbeitungs-Einrichtung oder des Halteteils aufgebracht werden muss.

Bei einem Adapterteil des erfindungsgemäßen Verbindungssystems lassen sich weitere Vorteile dadurch erzielen, dass die Kommunikations-Einrichtung ermittelt, ob die fahrzeugseitige Elektronik über die mechanische und elektrische Schnittstelle mit dem ersten Protokoll kommuniziert und, falls dies nicht der Fall ist, Daten übermittelt, die die fahrzeugseitige Elektronik veranlasst und/oder es der fahrzeugseitigen Elektronik ermöglicht, mit der Kommunikations-Einrichtung mittels des ersten Protokolls zu kommunizieren. Dadurch ist das Adapterteil sowohl in Verbindungssystemen einsetzbar, bei denen die Halteteile eine Steuereinrichtung zur Konvertierung des ersten, universellen Protokolls in ein zweites, fahrzeugspezifisches Protokoll verfügen, als auch in Verbindungssysteme einsetzbar, in denen das Halteteil oder eine vorgelagerte Signalverarbeitungs-Einrichtung aufgrund von vorgegebenen oder von dem Halteteil heruntergeladenen Daten mit dem Halteteil bereits über ein entsprechendes endgerätespezifisches Protokoll kommuniziert. Das Adapterteil ist demnach flexibel für eine Vielzahl unterschiedlicher Verbindungssyteme einsetzbar.

Besonders vorteilhaft ist es hierbei, dass das Adapterteil ein Gehäuse besitzt, das die Form einer Abdeckung ausformt, welche die elektrische und mechanische Schnittstelle abdeckt. Hierdurch ergibt sich eine Doppel-Nutzung:

Zum einen eine optische und mechanische Abdeckung der Schnittstelle, für den Fall, dass diese nicht benötigt wird, und zum anderen eine erhöhte Flexibilität durch die Möglichkeit der Kommunikation mit einer weiteren Gruppe von Mobilfunk-Endgeräten. Diese Mobilfunk-Endgeräte können hierbei beispielsweise in der Tasche des Teilnehmers oder im Kofferraum des Fahrzeuges verbleiben.

Alternativ hierzu ist es auch möglich, ein oder mehrere Eingabe- und Ausgabemittel auf dem Adapterteil anzuordnen und so das Benutzer-Interface des Mobilfunk-Endgerätes nachzubilden. Hierdurch wird die gewohnte Bedienung des Mobilfunk-Endgerätes ermöglicht, obwohl sich das Mobilfunk-Endgerät nicht im Sicht- oder Tastbereich des Teilnehmers befindet.

Im Folgenden wird die Erfindung anhand von mehreren Ausführungsbeispielen unter Zuhilfenahme der beiliegenden Zeichnungen beispielhaft erläutert.
- Fig. 1: zeigt eine perspektivische Darstellung eines Verbindungssystems mit einem Grundteil, einer Elektronik und einem Halteteil.
- Fig. 2: zeigt ein Blockschaltbild des Verbindungssystems nach Fig. 1.
- Fig. 3: zeigt eine Explosions-Darstellung des Halteteils nach Fig. 1.
- Fig. 4: zeigt ein Blockschaltbild eines erfindungsgemäßen Verbindungssystems.
- Fig. 5: zeigt eine perspektivische Darstellung des erfindungsgemäßen Verbindungssystems nach Fig. 4.
- Fig. 6a bis Fig. 6c: zeigen jeweils eine Draufsicht eines Adapterteils.
- Fig. 7: zeigt ein Blockschaltbild eines Adapterteils.

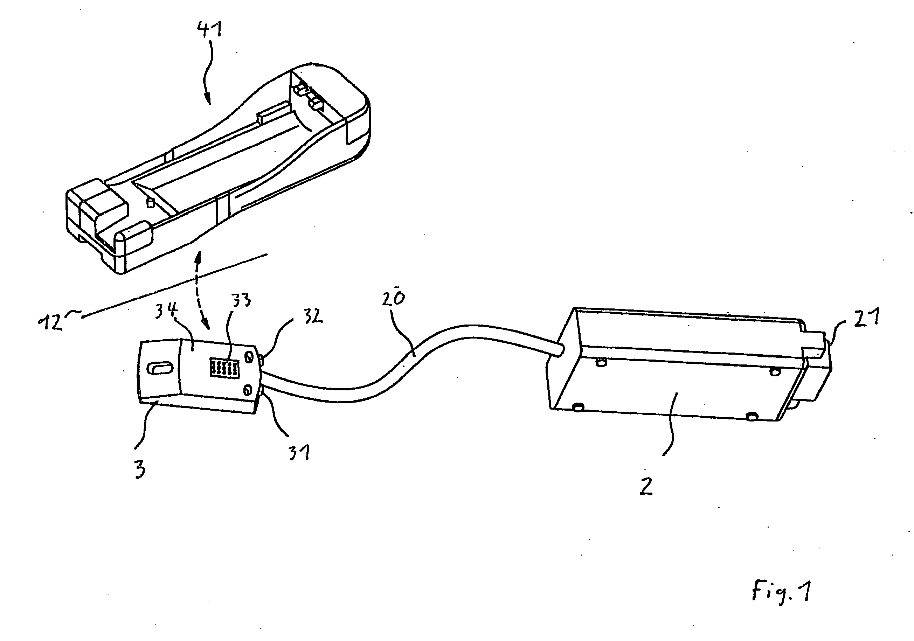

Fig. 1 zeigt mehrere Komponenten eines Verbindungssytems 1 zur Verbindung eines Mobilfunk-Endgerätes mit einem Fahrzeug. Fig. 1 zeigt so ein Halteteil 41, ein Grundteil 3 und eine Signalverarbeitungs-Einrichtung bzw. Elektronik 2.

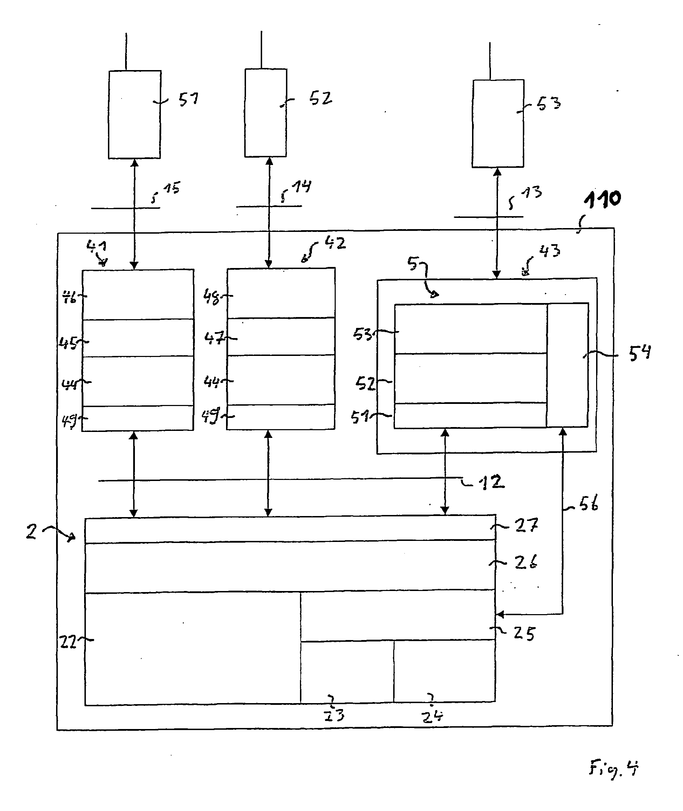

Das in den Fig. 1 bis 3 gezeigte Verbindungssystem 1 soll das Verständnis der Erfindung erleichtern und kann, wie anhand der Fig. 4 bis 7 beschrieben, zur Erfindung weitergebildet werden.

Das Halteteil 41 dient der Aufnahme eines speziellen Typs von Mobilfunk-Endgeräten. Auf der Vorderseite weist das Halteteil 41 eine Ausnehmung auf, die entsprechend der äußeren Formgebung dieses Mobilfunk-Endgeräte-Typs ausgeformt ist und die, unter Umständen zusammen mit entsprechenden Halte-, Fixier- oder Verriegelungsmitteln, eine mechanische Fixierung von Mobilfunk-Endgeräten dieses Typs in dem Halteteil 41 ermöglicht. Zusätzlich zu der mechanischen Fixierung ist es weiter möglich, dass das Halteteil 41 auch elektrische Kontaktmittel beinhaltet, die eine elektrische Verbindung zwischen dem Mobilfunk-Endgerät und dem Halteteil 41 ermöglichen. So weist das Halteteil 41 beispielsweise ein elektrisches Steckerelement auf, das in eine korrespondierende Steckerbuchse des Mobilfunk-Engerätes bei Einführung des Mobilfunk-Endgerätes in das Halteteil 41 eingreift. Hierbei ist es auch möglich, dass das Halteteil nicht nur ein elektrisches Steckerelement, sondern auch zwei oder mehr derartige Steckerelemente aufweist, wobei beispielsweise ein erstes Steckerelement der Verbindung des Mobilfunk-Endgerätes mit einer externen Fahrzeug-Antenne dient und ein zweites Steckerelement die galvanische Verbindung mit einer Steuer-Schnittstelle und/oder einer Stromversorgungs-Schnittstelle bereitstellt.

Sowohl die mechanische Schnittstelle, die eine mechanische Fixierung des Mobilfunk-Endgerätes ermöglicht, als auch die elektrische Schnittstelle, die eine elektrische Verbindung zwischen Halteteil und Mobilfunk-Endgerät ermöglicht, sind hierbei entsprechend dem jeweiligen Mobilfunk-Endgeräte-Typ ausgestaltet.

Das Verbindungssystem weist noch weitere, in Fig. 1 nicht gezeigte, Halteteile auf, die für andere Mobilfunk-Endgeräte-Typen bestimmt sind und die demnach eine andere mechanische und/oder elektrische Schnittstelle implementieren.

Auf der Unterseite weist das Halteteil 41 eine elektrische und mechanische Schnittstelle 12 auf, die der elektrischen und mechanischen Verbindung des Halteteils 41 mit dem Grundteil 3 dient. Sie weist so beispielsweise ein elektrisches Kontaktelement auf, das als Gegenstück zu einem elektrischen Kontaktelement 33 des Grundteils 3 in dem Halteteil 41 angeordnet ist und bei der mechanischen Fixierung des Halteteils 41 auf dem Grundteil 3 mit dem Kontaktelement 33 zur Bildung einer elektrischen Verbindung zwischen Halteteil 41 und Grundteil 3 zusammenwirkt. Die elektrische und mechanische Schnittstelle 12 ist hierbei bei allen Halteteilen des Verbindungssystems identisch, so dass jedes dieser Halteteile elektrisch und mechanisch mit dem somit universellen Grundteil 3 verbindbar ist.

Das Halteteil 41 oder das Grundteil 3 weisen hierbei vorzugsweise einen Verriegelungsmechanismus auf, der eine feste Fixierung des Halteteils 41 auf dem Grundteil 3 ermöglicht.

Weiter ist es auch möglich, dass das Halteteil 41 über ein mit einem Steckerelement versehenes Kabel mit dem Grundteil 3 verbindbar ist.

Das Grundteil 3 ist permanent im Fahrzeug befestigt, vorzugsweise im Tast- oder Sichtbereich des Fahrzeugführers. Das Grundteil 3 besteht aus einem Gehäuse 34, das Ausnehmungen für das elektrische Kontaktelement 33 und elektrische Schalter 31 und 32 aufweist. Weiter weist das Grundteil 3 eine elektronische Schaltung sowie das mit der elektronischen Schaltung verbundene elektrische Kontaktelement 33 auf. Das Gehäuse 34 ist permanent im Fahrzeug befestigbar, so dass die Grundplatte 34 beispielsweise Ausnehmungen zur Verschraubung oder Verrastung des Grundteils mit dem Fahrzeug aufweist.

Die Schalter 31 und 32 dienen der Steuerung von Funktionen, die von der Elektronik des Grundteils 3, der Signalverarbeitungs-Einrichtung 2, des Halteteils 41 und/oder des Mobilfunk-Endgerätes ausgeführt werden.

Das Grundteil 3 ist mit der Signalverarbeitungs-Einrichtung 2 über ein Kabel 20 verbunden.

Die Signalverarbeitungs-Einrichtung 2 ist ebenfalls fest im Fahrzeug installiert und besteht aus einem Gehäuse und aus einer in diesem Gehäuse angeordneter Elektronik. Diese Elektronik erbringt vorzugsweise die Funktion einer Freisprech-Einrichtung. Es ist jedoch auch möglich, dass diese Elektronik lediglich Teil-Funktionen einer Freisprech-Einrichtung erbringt. Weiter ist es auch möglich, dass die Signalverarbeitungs-Einrichtung Funktionen, wie Sprachverarbeitung, Spracherkennung und/oder Fahrzeug-Navigation erbringt. Die Signalverarbeitungs-Einrichtung 2 weist weiter ein elektrisches Anschlusselement 21 auf, das beispielsweise dem Anschluss von fest im Fahrzeug installierten Mikrofonen oder Lautsprechern, dem Anschluss an einen im Fahrzeug installierten Kommunikations-Bus oder dem Anschluss sonstiger elektronischer Einrichtungen des Fahrzeugs dient.

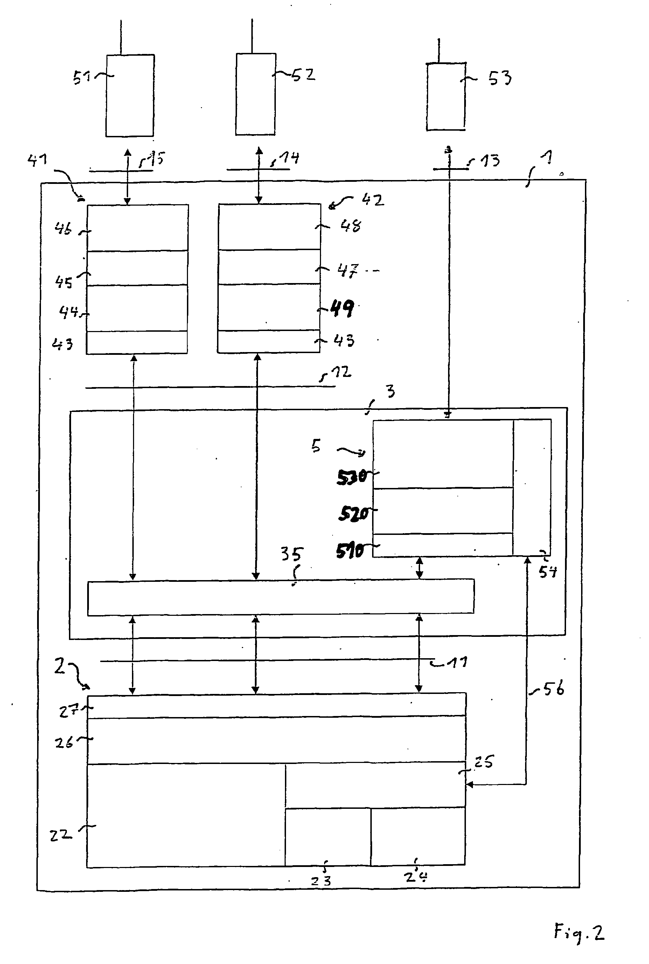

Das funktionelle Zusammenwirken der Signalverarbeitungs-Einrichtung 2, des Grundteils 3 und der Halteteile wird nun anhand von Fig. 2 erläutert.

Fig. 2 zeigt das Verbindungssystem 1 und Mobilfunk-Endgeräte 51, 52 und 53. Das Verbindungssystem 1 weist die Signalverarbeitungs-Einrichtung 2, das Grundteil 3 und mehrere unterschiedliche Halteteile auf, von denen in Fig. 2 das Halteteil 41 und ein Halteteil 42 gezeigt sind. Die Signalverarbeitungs-Einrichtung 2 ist mit dem Grundteil über eine elektrische Schnittstelle 11 verbunden, das Grundteil 3 ist mit den Halteteilen 41 und 42 über die mechanische und elektrische Schnittstelle 12 verbunden und die Halteteile 41 und 42 sind über jeweilige endgeräte-spezifische Schnittstellen 15 und 14 mit den Mobilfunk-Endgeräten 51 und 52 verbunden.

Die Signalverarbeitungs-Einrichtung 2 und die Halteteile 41 und 42 weisen jeweils einen Mikroprozessor oder Mikrokontroller auf, der Funktionen im Rahmen der Kommunikation zwischen Signalverarbeitungs-Einrichtung 2 und den Mobilfunk-Endgeräten 51 und 52 erbringt.

Aus funktioneller Sicht weist die Signalverarbeitungs-Einrichtung 2 zwei Kommunikations-Einheiten 27 und 26 und eine Steuereinheit 22 auf. Die Halteteile 41 und 42 weisen aus funktioneller Sicht Kommunikations-Einheiten 44, 46, 48 und 49 sowie Steuereinrichtungen 45 und 47 auf. Die Funktionen dieser Kommunikations-Einheiten werden hierbei durch den Ablauf eines jeweiligen Programm-Codes auf dem jeweiligen Mikroprozessor oder Mikrokontroller im Zusammenwirken mit zugeordneten peripheren Komponenten erbracht.

Die Steuereinheit 22 wird von Funktionen der Signalverarbeitungs-Einrichtung 2 gebildet, die zur Erbringung ihrer Funktion mit den Mobilfunk-Endgeräten 51 oder 52 kommunizieren. Eine derartige Funktion ist beispielsweise eine Freisprech-Einrichtung mit integrieter Spracherkennung. Zur Kommunikation mit dem Endgerät 51 oder 52 greift die Steuereinheit 22 auf die Kommunikations-Einheit 26 zu, die wiederum auf die Kommunikations-Einheit 27 zugreift.

Die Kommunikations-Einheit 27 stellt Funktionen bereit, die den Austausch von Daten über die elektrische Schnittstelle 11 mittels eines Transport-Protokolls ermöglichen. Die Kommunikations-Einheit 26 stellt Funktionen bereit, die die Kommunikation über die elektrische Schnittstelle 11 mittels eines auf diesem Transport-Protokoll aufbauenden universellen Kommunikations-Protokolls ermöglichen. Universell bedeutet hier, dass dieses Protokoll einen Satz von Kommandos und Daten-Telegrammen bereitstellt, der zum einen unabhängig von dem jeweiligen endgeräte-spezifischen API(=Application Program Interface) der Mobilfunk-Endgeräte 51 und 52 ist, und der zum anderen ausreichend ist, um die wesentlichen Funktionen dieser verschiedenartigen Endgeräte zu steuern. Dieses universelle Protokoll kann demnach nicht direkt von den Mobilfunk-Endgeräten 51 und 52 interpretiert werden, besitzt jedoch andererseits einen ausreichenden semantischen Umfang, um bei entsprechender Protokoll-Konvertierung alle diese verschiedenartigen Mobilfunk-Endgeräte steuern zu können.

Die Kommunikations-Einheiten 44 und 49 der Halteteile 41 und 42 umfassen die Funktionen der Kommunikations-Einheiten 27 bzw. 26, so dass eine Kommunikation zwischen der Steuereinheit 22 und den Steuereinrichtungen 45 bzw. 47 mittels des universellen Protokolls möglich ist. Die Kommunikations-Einheiten 46 und 48 stellen Funktionen bereit, die eine Kommunikation mit den Endgeräten 51 bzw. 52 über ein jeweiliges endgeräte-spezifisches Protokoll ermöglichen. Die Steuereinrichtungen 45 und 47 erbringen eine Protokoll-Konvertierung zwischen dem jeweiligen endgeräte-spezifischen Protokoll und dem universellen Protokoll.

Das Grundteil 3 weist aus funktioneller Sicht eine Auswahl-Schaltung 35 und eine Kommunikations-Einrichtung 5 auf. Die Kommunikations-Einrichtung 5 wird hierbei vorzugsweise von einem Mikrokontroller oder Mikroprozessor mit zugeordneten peripheren Elementen gebildet.

Aus funktioneller Sicht weist die Kommunikations-Einrichtung 5 hierbei drei Kommunikations-Einheiten 510, 520 und 530 sowie eine Steuereinheit 54 auf. Die Kommunikations-Einheiten 510 und 520 erbringen die Funktion der Kommunikations-Einheiten 27 bzw. 26 und ermöglichen demnach eine Kommunikation zwischen der Steuereinheit 22 und der Kommunikations-Einheit 530 über das universelle Protokoll. Die Kommunikations-Einheit 530 stellt Funktionen bereit, die eine drahtlose Kommunikation über eine weitere Schnittstelle 13 mit dem Mobilfunk-Endgerät 53 ermöglicht. Vorzugsweise handelt es sich bei der weiteren Schnittstelle 13 um eine Funk-Schnittstelle. Es ist jedoch auch möglich, dass die Kommunikation auf Ultraschall oder Infrarot basiert. Weiterhin erfolgt die Kommunikation über die weitere Schnittstelle 13 vorzugsweise mittels des Bluetooth-Protokolls, so dass die Kommunikations-Einheit 530 eine Konvertierung zwischen dem universellen Protokoll und dem Bluetooth-Protokoll durchführt.

Die Steuereinheit 54 stellt eine optimale Erweiterung der Kommunikations-Einrichtung 5 dar. Die Steuereinheit 54 überprüft, ob die Signalverarbeitungs-Einrichtung 2 über die elektrische Schnittstelle 11 mittels des universellen Protokolls kommuniziert. Falls dies nicht der Fall ist, übermittelt sie an die Signalverarbeitungs-Einrichtung 2 Daten 56, die die Signalverarbeitungs-Einrichtung 2 verlassen und/oder es der Signalverarbeitungs-Einrichtung 2 ermöglichen, mit der Kommunikations-Einrichtung 5 über die elektrische Schnittstelle 11 mittels des universellen Protokolls zu kommunizieren. Hierdurch wird es möglich, dass das Grundteil 3 in verschiedenartigen Verbindungssystemen mit verschiedenartig ausgestalteten Halteteilen und Signalverarbeitungs-Einrichtungen einsetzbar ist.

Dies wird nun anhand zweier weiterer Ausführungsbeispiele erläutert:

Zum einen ist es möglich, dass die Signalverarbeitungs-Einrichtung 2 mit den Mobilfunk-Endgeräten 51 und 52 nicht mittels des universellen Protokolls, sondern bereits jeweils mittels des jeweiligen endgeräte-spezifischen Protokolls kommuniziert. Damit werden von der Signalverarbeitungs-Einrichtung 2 jeweils unterschiedliche Protokolle für die Kommunikation über die elektrische Schnittstelle 11 verwendet, je nachdem, welches Endgerät und welches Halteteil mit dem Grundteil 3 verbunden ist. Die Wahl des jeweiligen korrekten Protokolls erfolgt hierbei beispielsweise mittels Daten, die von den Halteteilen 41 oder 42 an eine Steuereinheit 25 der Signalverarbeitungs-Einrichtung 2 gesendet werden.

Im Falle der Verwendung einer derartigen Signalverarbeitungs-Einrichtung 2 übermittelt die Steuereinheit 54 gemäß eines ersten weiteren Ausführungsbeispiels ein Kommando an eine Steuereinheit 25 der Signalverarbeitungs-Einrichtung 2, das auf ein bestimmtes, in der Signalverarbeitungs-Einrichtung 2 bereitstehendes Protokoll verweist. Im Folgenden wird dieses Protokoll von der Signalverarbeitungs-Einrichtung 2 zur Kommunikation über die elektrische Schnittstelle 11 verwendet.

Gemäß eines zweiten weiteren Ausführungsbeispiels übermittelt die Steuereinheit 54 an die Steuereinheit 25 Software und Daten, die es der Signalverarbeitungs-Einrichtung 2 erst ermöglichen, über die elektrische Schnittstelle 11 mittels des von der Kommunikations-Einrichtung 5 erwarteten Protokolls zu kommunizieren.

Fig. 2 zeigt hierzu zwei Steuereinheiten 23 und 24, wobei die Steuereinheit 23 die signalverarbeitungsseitigen Funktionen für die Ausführung des ersten weiteren Ausführungsbeispiels und die Steuereinheit 24 die signalverarbeitungsseitigen Funktionen für die Ausführung des zweiten weiteren Ausführungsbeispiels enthalten.

Die Auswahl-Schaltung 35 dient der wahlweisen Verbindung der elektrischen Schnittstelle 11 mit der mechanischen und elektrischen Schnittstelle 12 oder der elektrischen Schnittstelle 11 mit der Kommunikations-Einrichtung 5. Die Umschaltung kann hierbei aufgrund der manuellen Betätigung eines in dem Grundteil 3 angeordneten Schalters oder auch automatisch erfolgen. So ist es beispielsweise möglich, dass das Grundteil 3 einen Kontaktschalter aufweist, der erkennt, ob ein Halteteil auf dem Grundteil 3 fixiert ist. Ist dies der Fall, so wird die elektrische Schnittstelle 11 mit der mechanischen und elektrischen Schnittstelle 12 verbunden. Ist dies nicht der Fall, so wird die elektrische Schnittstelle 11 mit der Kommunikations-Einrichtung 5 verbunden.

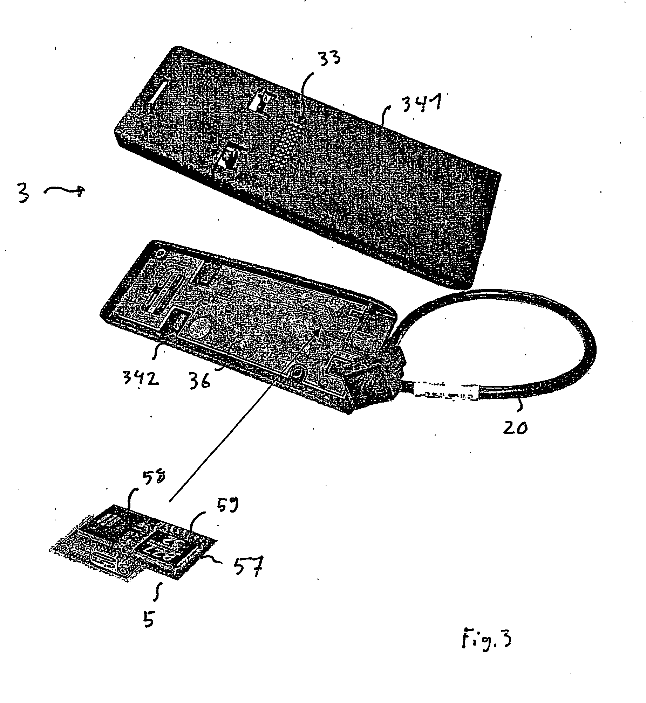

Fig. 3 zeigt nun eine weitere Ausführungsform des Grundteils 3.

Das Grundteil 3 weist hier ein Gehäuse-Oberteil 341 und ein Gehäuse-Unterteil 342 auf. Innerhalb des Gehäuses ist eine Platine 36 angeordnet, die elektrisch mit dem Verbindungskabel 20 verbunden ist. Die Platine 36 ist hierbei zur Aufnahme der Kommunikations-Einrichtung 5 vorbereitet. So sind hier mehrere elektrische Kontaktpunkte vorgesehen, auf die die Kommunikations-Einrichtung 5 aufgesetzt werden kann.

Wie in Fig. 3 dargestellt, besteht die Kommunikations-Einrichtung 5 hier aus einem elektrischen Verbindungselement 57, auf dem mehrere Bauteile 58 und 59 aufgebracht sind. Bei dem elektrischen Verbindungselement 57 handelt es sich vorzugsweise um eine mehrlagige Platine, die auf einer Seite mit elektrischen Kontaktpunkten zur elektrischen Verbindung mit der Platine 36 versehen ist.

Je nach Ausstattungs-Variante kann das Grundteil 3 demnach auf einfache Weise mit der Kommunikations-Einrichtung 5 ausgestattet werden oder nicht ausgestattet werden.

Fig. 4 verdeutlicht die Funktionsweise eines erfindungsgemäßen Verbindungssystems 110, das zur Verbindung von Mobilfunk-Endgeräten 51, 52 und 53 mit einer im Fahrzeug angeordneten Elektronik 2 dient.

Fig. 4 zeigt das Verbindungssystem 110, die Halteteile 41 und 42 sowie ein Adapterteil 43. Zwischen den Halteteilen 41 und 42 sowie dem Adapterteil 43 einerseits und der Elektronik bzw. Signalverarbeitungs-Einrichtung 2 andererseits ist ein Grundteil angeordnet (nicht in Fig. 4 gezeigt), das beidseitig die mechanische und elektrische Schnittstelle 12 aufweist und damit die Signale zwischen Signalverarbeitungs-Einrichtung 2 und Halteteil 41, Halteteil 42 bzw. Adapterteil 43 durchschleift.

Das Adapterteil 43 weist dieselbe elektrische und mechanische Schnittstelle 12 wie die Halteteile 41 und 42 auf, so dass das Adapterteil 43 in derselben Weise wie die Halteteile 41 und 42 mit dem Grundteil verbindbar ist. Weiter weist das Adapterteil 43 die Kommunikations-Einrichtung 5 auf.

Die Signalverarbeitungs-Einrichtung 2, die Halteteile 41 und 42 sowie die Mobilfunk-Endgeräte 51, 52 und 53 sind hier wie nach Fig. 1 und Fig. 2 ausgestaltet. Das Grundteil ist wie das Grundteil 3 nach Fig. 1 und Fig. 2 ausgestaltet, mit dem Unterschied, dass das Grundteil nicht die Kommunikations-Einrichtung 5 und nicht die Auswahl-Schaltung 35 aufweist.

Hierbei ist es jedoch auch weiter möglich, dass ein Teil oder sämtliche Funktionen der Signalverarbeitungs-Einrichtung 2 von der Signalverarbeitungs-Einrichtung 2 in das Grundteil verlagert werden.

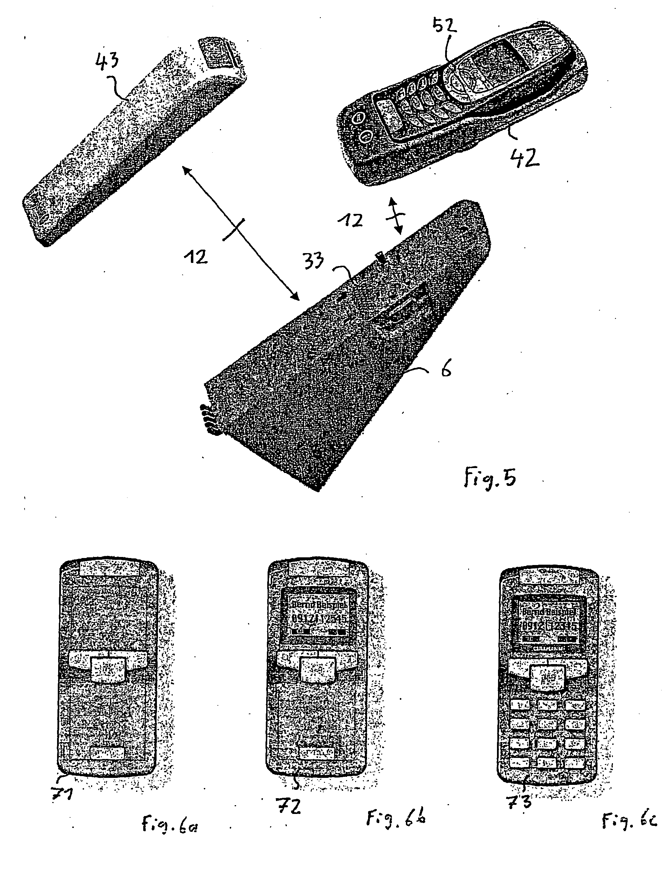

Fig. 5 zeigt ein bevorzugtes Ausführungsbeispiel des Adapterteils 43 sowie des für das Verbindungssystem 110 verwendeten Grundteils 6.

Fig. 5 zeigt ein Grundteil 6, das über die elektrische und mechanische Schnittstelle 12 mit dem Adapterteil 43 oder dem Halteteil 42 mit eingelegtem Mobilfunk-Endgerät 52 verbindbar ist. Wie in Fig. 5 gezeigt, hat das Adapterteil 43 hier die Form einer Abdeckhaube, die die mechanische und elektrische Schnittstelle 12 des Grundteils 6 abdeckt. Das Unterteil des Gehäuses des Adapterteils 43 weist demnach Ausnehmungen auf, die eine Verrastung mit den in Fig. 5 gezeigten Rasterelementen ermöglicht. Weiter weist das Unterteil des Gehäuses ein elektrisches Kontaktelement auf, das als Gegenstück zu dem in Fig. 5 gezeigten Kontaktelement 33 des Grundteils 6 angeordnet ist.

Vorteilhaft ist, wenn das Adapterteil 43 ein Gehäuse mit einer Gehäuseform aufweist, die die Grundfläche des Grundteils 6 formschlüssig abdeckt und damit die mechanische und elektrische Schnittstelle 12 vollkommen optisch verschwinden lässt. Weiterhin kann das Adapterteil noch eine oder mehrere Leuchtdioden zur Status-Anzeige aufweisen.

Fig. 6a, Fig. 6b und Fig. 6c zeigen weitere mögliche Ausführungsformen eines Adapterteils zur Verwendung in dem Verbindungssystem 110.

Ein Adapterteil 73 weist mehrere Ein- und Ausgabemittel auf, die das Benutzer-Interface des Mobilfunk-Endgerätes 53 nachbilden, so dass der vollständige Bedienumfang dieses Mobilfunk-Endgerätes für den Benutzer zur Verfügung steht, ohne dass dieses im Tastbereich und/oder Sichtbereich des Fahrzeugführers angeordnet sein muss.

Ein Adapterteil 72 weist ein reduziertes Benutzer-Interface auf, das im wesentlichen eine Anzeigeeinrichtung und Tasten zur Änderung der Lautstärke, zur zeitweisen Unterbrechung der Kommunikations-Verbindung und zum Abbruch / zur Initiierung der Kommunikations-Verbindung aufweist.

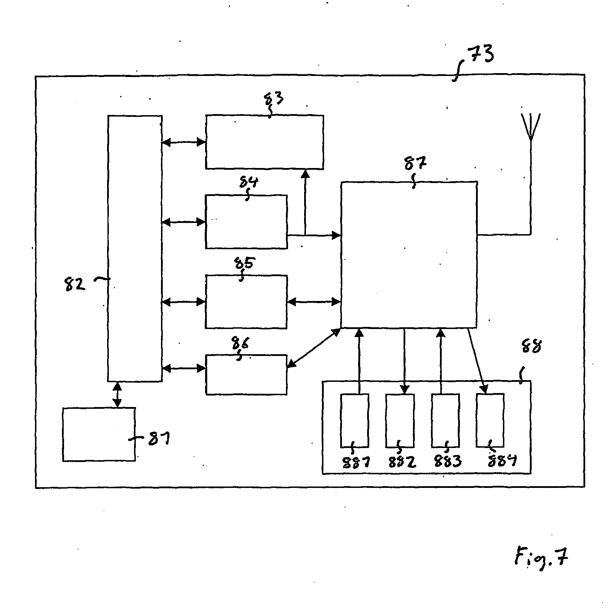

Ein Adapterteil 71 des Adapterteils 73 wird nun anhand von Fig. 7 erläutert.

Fig. 7 zeigt das Adapterteil 73 mit einem elektrischen Verbindungselement 82, einer Anschlussbuchse für ein Kabel 81, einem EEPROM 83, einer Stromversorgungs-Einrichtung 84, einem Treiber 85 für die Signalisierungs-Leitungen, einer Adaptionsschaltung 86 zur Adaption der Audio-Signale, einem Mikrokontroller 87 und einer Ein- und Ausgabeeinheit 88, die einen Display 884, ein Tastenfeld 883, eine LED 882 und BedienSchalter 881 aufweist. Der Mikrokontroller 87 ist im weiteren mit einer HF-Schaltung verbunden, die wiederum mit einer Antenne zur Kommunikation über die Funk-Schnittstelle 13 versehen ist.

Der Mikrokontroller 87 erbringt hierbei die Funktionen der Kommunikations-Einrichtung 5, wie diese beispielsweise in Fig. 2 und Fig. 4 beschrieben sind.

## Patentansprüche

1. Verbindungssystem (110) zur Verbindung von Mobilfunk-Endgeräten (51, 52, 53) mit einer im Fahrzeug angeordneten Elektronik (2), mit einem Adapterteil (43, 71, 72, 73), einem Grundteil (6) zur permanenten Befestigung im Fahrzeug und einem oder mehreren Halteteilen (41, 42) zur jeweiligen Aufnahme eines Mobilfunk-Endgerätes (51, 52), wobei die Halteteile (41, 42) über eine mechanische und elektrische Schnittstelle (12) mit dem Grundteil (6) verbindbar sind, und wobei die mechanische und elektrische Schnittstelle (12) eine Schnittstelle zum Anschluß von Halteteilen (41, 42) für Mobilfunk-Endgeräte (51, 52) ist, welche Halteteile (41, 42) eine Steuereinrichtung (45, 47) zur Kommunikation über die mechanische und elektrische Schnittstelle (12) mittels eines ersten, universellen Protokolls und zur Konvertierung des ersten universellen Protokolls in ein zweites, endgerätespezifisches Protokoll aufweisen, **dadurch gekennzeichnet, daß** das Adapterteil (43, 71, 72, 73) die mechanische und elektrische Schnittstelle (12) zur elektrischen und mechanischen Verbindung mit dem Grundteil (6) des Verbindungssystems (110) anstelle des Halteteils (41,42) aufweist, daß das Adapterteil (43) eine Kommunikations-Einrichtung (5) zur drahtlosen Kommunikation mit einem Mobilfunk-Endgerät (53) über eine weitere Schnittstelle (13) aufweist und die Kommunikations-Einrichtung (5) weiter so gestaltet ist, daß sie über die mechanische und elektrische Schnittstelle (12) mittels des ersten, universellen Protokolls kommuniziert und zur Kommunikation mit dem Mobilfunk-Endgerät (53) über die weitere Schnittstelle (13) das erste Protokoll in ein drittes Protokoll konvertiert, und daß das Adapterteil (43) ein Gehäuse aufweist, das in Form einer Abdeckung ausgeformt ist, die das Grundteil (6) im Bereich der elektrischen und mechanischen Schnittstelle (12) abdeckt.

2. Verbindungssystem (110) nach Anspruch 1, **dadurch gekennzeichnet, daß** die Kommunikations-Einrichtung (5) weiter so ausgestaltet ist, daß sie über die mechanische und elektrische Schnittstelle (12) Daten (56) übermittelt, die die fahrzeugseitige Elektronik (2) veranlasst und/oder es der fahrzeugseitigen Elektronik (2) ermöglicht, mit der Kommunikations-Einrichtung (5) mittels des ersten Protokolls zu kommunizieren.

3. Verbindungssystem (110) nach Anspruch 2, **dadurch gekennzeichnet, daß** die Kommunikations-Einrichtung (5) weiter so ausgestaltet ist, daß sie ermittelt, ob die fahrzeugseitige Elektronik (2) über die mechanische und elektrische Schnittstelle (12) mit dem ersten Protokoll kommuniziert, und, falls dies nicht der Fall ist, die Daten (56) übermittelt.

4. Verbindungssystem (110) nach einem der vorangehenden Ansprüche, **dadurch gekennzeichnet, daß** das Adapterteil (72, 73) weiter eine Anzeigevorrichtung aufweist.

5. Verbindungssystem (110) nach einem der vorangehenden Ansprüche, **dadurch gekennzeichnet, daß** das Adapterteil (73) weiter ein Tastenfeld aufweist.

6. Verbindungssystem (110) nach einem der vorangehenden Ansprüche, **dadurch gekennzeichnet, daß** das Adapterteil (73) ein oder mehrere Eingabe- und Ausgabemittel zur Nachbildung des Benutzer-Interfaces des Mobilfunk-Endgerätes (53) aufweist, mit dem das Adapterteil (73) über die weitere Schnittstelle (13) kommuniziert.

7. Verbindungssystem (110) nach einem der Ansprüche 1 bis 6, **dadurch gekennzeichnet, daß** das Grundteil (6) eine elektrische Schnittstelle (11) zum Anschluß an die im Fahrzeug angeordnete Elektronik (2) aufweist, die zumindest Teilfunktionen einer Freisprecheinrichtung erbringt.

8. Verbindungssystem (110) nach Anspruch 7, **dadurch gekennzeichnet, daß** die mechanische und elektrische Schnittstelle (12) des Grundteils (3) eine Schnittstelle zur Kommunikation mittels eines oder mehrerer endgerätespezifischer Protokolle ist und daß die Kommunikations-Einrichtung (5) weiter so ausgestaltet ist, daß sie an die fahrzeugseitige Elektronik (2) Daten (56) übermittelt, die die fahrzeugseitige Elektronik (2) veranlaßt und/oder es der fahrzeugseitigen Elektronik (2) ermöglicht, mit der Kommunikations-Einrichtung (5) mittels des ersten Protokolls zu kommunizieren.

9. Verbindungssystem (110) nach Anspruch 7 oder 8, **dadurch gekennzeichnet, daß** die elektrische Schnittstelle (11) eine Schnittstelle zur Kommunikation mittels des ersten, universellen Protokolls ist.

10. Verbindungssystem (110) nach einem der Ansprüche 1 bis 9, **dadurch gekennzeichnet, daß** die weitere Schnittstelle (13) eine Funk-Schnittstelle und das dritte Protokoll vorzugsweise ein Bluetooth-Protokoll ist.

## Claims

1. A connection system (110) for connecting mobile terminals (51, 52, 53) to electronics (2) arranged in the vehicle, comprising an adaptor part (43, 71, 72, 73), a base part (6) for permanent attachment in the vehicle and one or more holding parts (41, 42) for respectively receiving a mobile terminal (51, 52), wherein the holding parts (41, 42) can be connected to the base part (6) via a mechanical and electrical interface (12), and wherein the mechanical and electrical interface (12) is an interface for connecting holding parts (41, 42) for mobile terminals (51, 52), which holding parts (41, 42) comprise a control device (45, 47) for communicating via the mechanical electrical interface (12) by means of a first universal protocol and for converting the first universal protocol into a second mobile terminal-specific protocol,
**characterised in that** the adaptor part (43, 71, 72, 73) comprises the mechanical and electrical interface (12) for electrical and mechanical connection to the base part (6) of the connection system (110) instead of the holding part (41, 42), **in that** the adaptor part (43) comprises a communication device (5) for wireless communication with a mobile terminal (53) via a further interface (13), and the communication device (5) is further designed so as to communicate via the mechanical electrical interface (12) by means of the first universal protocol and convert the first protocol into a third protocol for communication with the mobile terminal (53) via a further interface (13) and **in that** the adaptor part (43) comprises a housing which is formed as a cover so as to cover the base part (6) in the area of the electrical and mechanical interface (12).

2. The connection system (110) according to claim 1, **characterised in that** the communication device (5) is further designed so as to transmit data (56) via the mechanical and electrical interface (12), which causes the electronics (2) on the vehicle side and/or enables the electronics (2) on the vehicle side to communicate with the communication device (5) by means of a first protocol.

3. The connection system (110) according to claim 2, **characterised in that** the communication device (5) is further designed so as to ascertain as to whether the electronics (2) on the vehicle side communicates with the first protocol via the mechanical and electrical interface (12), and if this is not case, transmits the data (56).

4. The connection system (110) according to one of the preceding claims, **characterised in that** the adaptor part (72, 73) further comprises an indicating device.

5. The connection system (110) according to one of the preceding claims, **characterised in that** the adaptor part (73) further comprises a key pad.

6. The connection system (110) according to one of the preceding claims, **characterised in that** the adaptor part (73) comprises one or more input and output means for reproducing the user interface of the mobile terminal (53) with which the adaptor part (73) communicates via the further interface (13).

7. The connection system (110) according to one of claims 1 to 6, **characterised in that** the base part (6) comprises an electrical interface (11) for connection to the electronics (2) arranged in the vehicle, which at least provides partial functions of a hands-free-equipment.

8. The connection system (110) according to claim 7, **characterised in that** the mechanical and electrical interface (12) of the base part (3) is an interface for communicating by means of one or more mobile terminal-specific protocols and **in that** the communication device (5) is further designed so as to transmit to the electronics (2) on the vehicle side data (56) which cause the electronics (2) on the vehicle side and/or enable the electronics (2) on the vehicle side to communicate with the communication device (5) by means of the first protocol.

9. The connection system (110) according to claim 7 or claim 8, **characterised in that** the electrical interface (11) is an interface for communicating by means of the first universal protocol.

10. The connection system (110) according to one of claims 1 to 9, **characterised in that** the further interface (13) is a radio interface and **in that** the third protocol is preferably a Bluetooth protocol.

## Revendications

1. Système de liaison (110) pour relier des terminaux radio mobiles (51,52,53) avec un équipement électronique (2) disposé dans le véhicule, comportant une pièce d'adaptation (43,71,72,73), une pièce de base (6) à des fins de fixation permanente dans le véhicule et une ou plusieurs pièces de retenue (41,42) recevant respectivement un terminal radio mobile (51,52), dans lequel les pièces de retenue (41,42) peuvent être reliées par l'intermédiaire d'une interface mécanique et électrique (12) avec la pièce de base (6), et dans lequel l'interface mécanique et électrique (12) est une interface à des fins de raccordement de pièces de retenue (41,42) pour terminaux radio mobiles (51,52), lesquelles pièces de retenue (41,42) présentent un dispositif de commande (45,47) à des fins de communication via l'interface mécanique et électrique (12) au moyen d'un premier protocole universel et à des fins de formatage du premier protocole universel en un deuxième protocole spécifique au terminal, **caractérisé en ce que** la pièce d'adaptation (43,71,72,73) présente l'interface mécanique et électrique (12) à des fins de liaison électrique et mécanique avec la pièce de base (6) du système de liaison (110) à la place de la pièce de retenue (41,42), **en ce que** la pièce d'adaptation (43) présente un dispositif de communication (5) à des fins de communication sans fil avec un terminal radio mobile (53) via une autre interface (13) et le dispositif de communication (5) est en outre conçu de telle sorte qu'il communique via l'interface mécanique et électrique (12) au moyen du premier protocole universel et convertisse à des fins de communication avec le terminal radio mobile (53) via l'autre interface (13) le premier protocole en un troisième protocole, et **en ce que** la pièce d'adaptation (43) présente un boîtier, qui est façonné sous forme de couvercle, qui recouvre la pièce de base (6) au niveau de l'interface électrique et mécanique (12).

2. Système de liaison (110) selon la revendication 1, **caractérisé en ce que** le dispositif de communication (5) est en outre conçu de telle sorte qu'il transmette par l'intermédiaire de l'interface mécanique et électrique (12) des données (56), qui amènent l'équipement électronique du côté du véhicule (2) et/ou permettent à l'équipement électronique du côté du véhicule (2) de communiquer avec le dispositif de communication (5) au moyen du premier protocole.

3. Système de liaison (110) selon la revendication 2, **caractérisé en ce que** le dispositif de communication (5) est en outre conçu de telle sorte qu'il détermine, si l'équipement électronique du côté du véhicule (2) communique via l'interface mécanique et électrique (12) avec le premier protocole et, au cas où cela n'est pas le cas transmet les données (56).

4. Système de liaison (110) selon une des revendications précédentes, **caractérisé en ce que** la pièce d'adaptation (72,73) présente en outre un dispositif d'affichage.

5. Système de liaison (110) selon une des revendications précédentes, **caractérisé en ce que** la pièce d'adaptation (73) présente en outre un clavier.

6. Système de liaison (110) selon une des revendications précédentes, **caractérisé en ce que** la pièce d'adaptation (73) présente un ou plusieurs moyens d'entrée et de sortie à des fins de reproduction de l'interface d'utilisateur du terminal radio mobile (53), avec laquelle la pièce d'adaptateur (73) communique via l'autre interface (13).

7. Système de liaison (110) selon une des revendications 1 à 6, **caractérisé en ce que** la pièce de base (6) présente une interface électrique (11) à des fins de raccordement à l'équipement électronique (2) disposé dans le véhicule, qui fournit au moins des fonctions partielles d'un kit mains libres.

8. Système de liaison (110) selon la revendication 7, **caractérisé en ce que** l'interface mécanique et électrique (12) de la pièce de base (3) est une interface à des fins de communication au moyen d'un ou plusieurs protocoles spécifiques au terminal et **en ce que** le dispositif de communication (5) est en outre conçu de telle sorte qu'il transmette à l'équipement électronique du côté du véhicule (2) des données (56), qui amènent l'équipement électronique du côté du véhicule (2) et/ou permettent à l'équipement électronique du côté du véhicule (2) de communiquer avec le dispositif de communication (5) au moyen du premier protocole.

9. Système de liaison (110) selon la revendication 7 ou 8, **caractérisé en ce que** l'interface électrique (11) est une interface à des fins de communication au moyen du premier protocole universel.

10. Système de liaison (110) selon une des revendications 1 à 9, **caractérisé en ce que** l'autre interface (13) est une interface radio et le troisième protocole est de préférence un protocole Bluetooth.
